# EUROPEAN PATENT APPLICATION

(11) **EP 1 158 693 A1**
(43) Date of publication of application: **28.11.2001**
(21) Application number: 00304455.9
(22) Date of filing: 25.05.2000
(51) Int. Cl.: H04B 7/02

(54) **Distributed rake receiver**

(71) Applicant: LUCENT TECHNOLOGIES INC., Murray Hill, New Jersey 07974-0636 (US)
(72) Inventor: Freiberg, Lorenz Fred, Swindon SN5 8ZR, Wiltshire (GB); Lin, Jie, Swindon SN5 6PP, Wiltshire (GB); Reader, David Jonathan, London W4 3AS (GB); Sabel, Lesley Phillip, Swindon SN1 3AE, Wiltshire (GB)
(74) Representative: Williams, David John

(57) **Abstract**

There is disclosed a method for processing received signals in a spread-spectrum communication system. The method comprises receiving spread-spectrum signals in a plurality of channels; de-spreading the received spread spectrum signal received in each channel; and routing the de-spread received signal in each channel for further processing. The step of de-spreading the received spread-spectrum signals is preferably included in a demodulating step in the plurality of channels.

## Description

### Filed of the Invention

The present invention relates to spread-spectrum communication systems, and particularly to a technique for de-spreading signals in such systems.

### Background to the Invention

The rake receiver is unique to code division multiple access (CDMA). In CDMA each user is assigned a unique spreading code with minimal cross-correlation with respect to other codes as well as minimal auto-correlation with respect to time-shifted versions of itself. Consequently a separate rake finger or correlator can be assigned to each multi-path component resulting from transmission in a time dispersive channel. Assigning individual rake fingers to different shifts in time for a single received signal is known as micro-diversity. The fingers of a rake receiver may also be assigned to separate diversity channels as in the case of more than one antenna at the receiver. The rake receiver then combines multi-path components from more than one independently fading channel.

To extend this concept one step further, the two diversity antennas may be located in entirely different sectors. In such a scenario, the two diversity channels experience independent fast-fading: shadowing and propagation loss are independent. This type of diversity is referred to as macro-diversity. Soft hand-over between sectors is achieved through macro-diversity.

In the up-link, each transmitter has a unique long code to reduce the interference among different mobiles at the base station receiver handling the same call. Channelisation codes are also used, but only to distinguish separate multi-code channels used by a single mobile.

From the perspective of the receiver, during micro-diversity a rake receiver is able to use the same code in all correlator fingers. However, the signal is received over a set of sectors in one or several cells. Two different cells must use two different rake receivers to process the two diversity signals. In contrast a single cell can pool its resources to process signals for several sectors using a single rake receiver. However, the transfer and timing problems arising from several RF front ends (one per sector) and a single rake receiver need to be resolved.

It is therefore an object of the present invention to provide a technique in which an efficient transfer of signals from the RF front end to the pool of processing resources is provided.

### Summary of the Invention

In accordance with one aspect of the present invention there is provided a method for processing received signals in a spread-spectrum communication system, comprising: receiving spread-spectrum signals in a plurality of channels; de-spreading the received spread spectrum signal received in each channel; and routing the de-spread received signal in each channel for further processing.

The step of de-spreading the received spread-spectrum signals may be included in a demodulating step in the plurality of channels.

The demodulation step may include performing channel estimation and correction.

The step of routing may comprise combining the de-spread received signal in each channel with the de-spread received signals in other channels associated with the same transmitter.

Each channel may receive spread spectrum signals associated with a plurality of transmitters. The step of de-spreading the received spread-spectrum signal may include combining those de-spread signals associated with the same transmitter.

According to a further aspect of the present invention there is provided a spread-spectrum communication system comprising: input circuitry for receiving spread-spectrum signals in a plurality of channels; de-spreading circuitry for de-spreading the received spread-spectrum signal in each channel; and routing means for routing the de-spread received signal in each channel to further processing circuitry.

The spread-spectrum communication system may further comprise channel estimation and correction circuitry for demodulating the de-spread signal received signal in each channel prior to routing.

The routing means may include combining means for combining the outputs of the de-spreading circuitry which are associated with the same transmitter.

The de-spreading circuitry may include combining means for combining those de-spread received signals received in the same channel and associated with the same transmitter.

The invention will now be described by way of example with reference to the accompanying drawings in which:-

### Brief Description of the Figures

Figures 1(a) and 1(b) illustrate examples of scenarios in which the present invention may be implemented;
Figure 2 illustrates a prior art implementation of a distribution bus in a spread-spectrum mobile communication system;
Figure 3 illustrates an implementation according to the present invention of a distribution bus in a spread-spectrum mobile communication system;
Figures 4(a) and 4(b) illustrate an example implementation of the distribution bus of Figure 3; and
Figure 5 illustrates an alternative example implementation of the distribution bus of Figure 3.

### Description of Preferred Embodiment

The invention will now be described by way of example with reference to a particular advantageous implementation. It will be understood that the invention is not limited to such an implementation, and may have applicability beyond the example given herein. Where appropriate modifications to, or alternative applications for, the invention are discussed herein. Similarly the invention is not limited to the specific dimensions of the system set forth in the example implementations.

The invention is described herein by way of example with specific reference to a spread-spectrum mobile communications system employing rake receivers for de-spreading in the receiver. The invention is particularly described by way of reference to a macro-diversity system in the up-link transmission from mobile station(s) to base station.

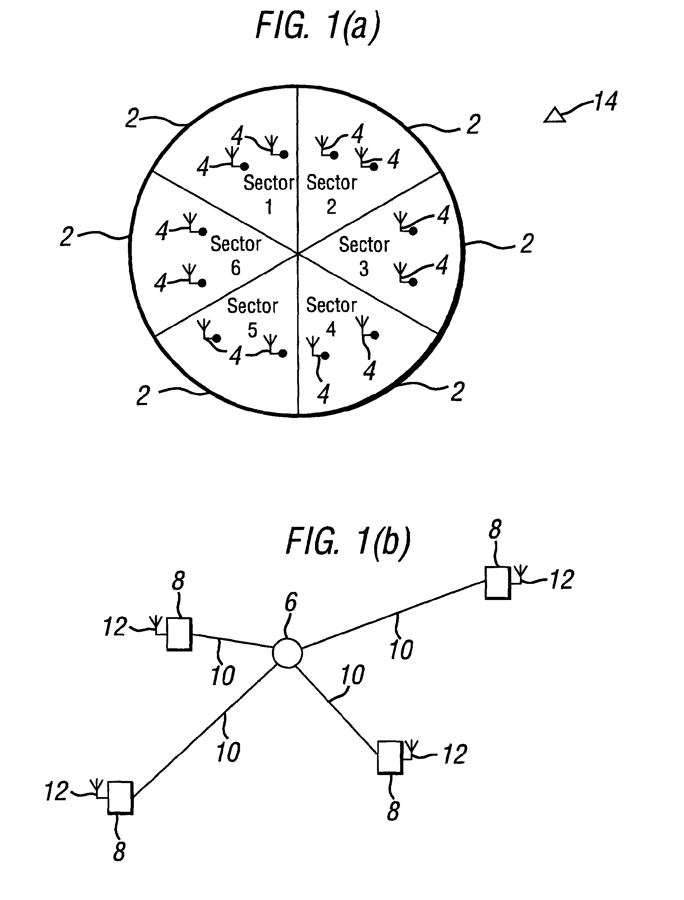

Referring to Figures 1(a) and 1(b) there are illustrated two example scenarios in which the invention may be advantageously utilised.

Figure 1(a) illustrates a macro-cell, generally designated by reference numeral 14, split into a six sector micro-cellular structure. Each of the six sectors is designated by a reference numeral 2. Each sector 2 has two antennas designated by reference numeral 4. In this environment it is assumed that each of the twelve antennas 4 is a directional antenna mounted on or near a common base station. The information received on each of the twelve antennas is therefore processed in the common base station.

On the assumption there is only one possible carrier frequency, there are 12 channels in this system (6 sectors x 2 antennas per sector x 1 carrier frequency).

Referring to Figure 1(b) there is illustrated a second scenario in which the present invention may be advantageously utilised. In this scenario in a distributed single cell a base station 6 is connected via connections 10 to a plurality of base transceiver stations 8, each having at least one antenna 12. The base transceiver station processes the signals received in each of the base stations 8. In the example of Figure 1(b) each of the base stations 8 may be spaced from the base transceiver station 6 by a distance of anywhere up to several km.

It will be understood by one skilled in the art that the example scenarios illustrated in Figures 1(a) and 1(b) are not mutually exclusive, and other scenarios may reflect a combination of the two. Still further, the present invention may be extended to scenarios other than those specifically discussed herein, and the skilled person will recognise the general applicability of the invention.

The invention is described hereinbelow with reference to the example scenario of Figure 1(a). Although in the following description the scenario is described with reference to particular numbers (e.g. six sectors, two antennas per sector, one carrier frequency) it will be appreciated that these numbers are referred to for illustrative purposes only, and the invention is not limited to such numbers.

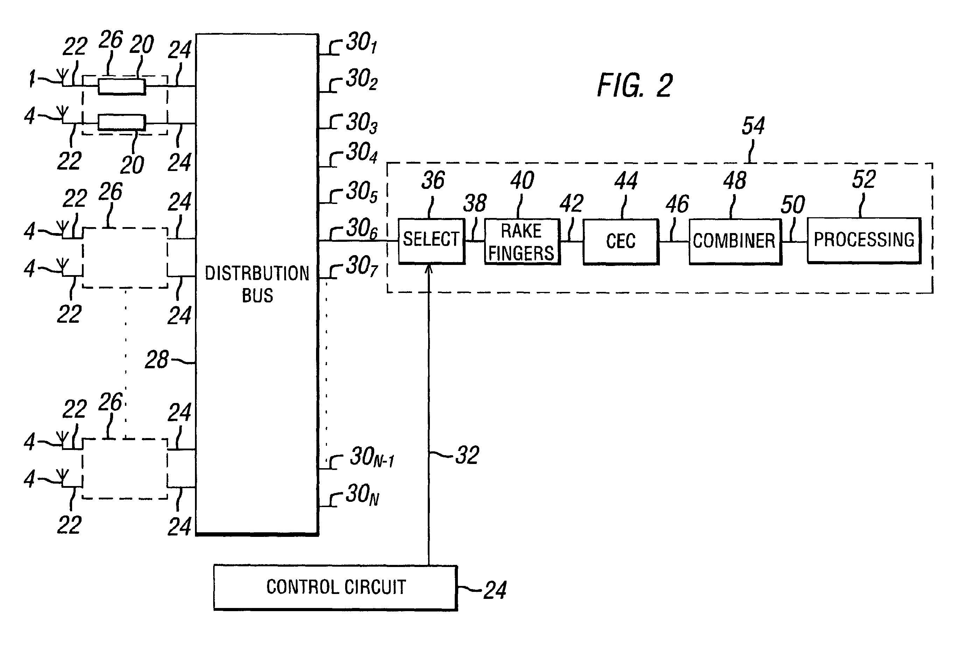

In order to understand the invention, a description is first given hereinbelow of a prior art arrangement. Referring to Figure 2, there is illustrated one known arrangement for the implementation of a receiver in a base station such as that which supports the structure of Figure 1(a).

The signal detected at each antenna 4 is provided on a signal line 22 to the front-end processing circuitry 20 in the particular sector 26 associated with the respective antenna. The front-end processing circuitry 20 provides on signal lines 24 the respective front-end processed received signal. Thus, in the present example, twelve signals, corresponding to the twelve channels of the scenario of Figure 1(a), are presented on the twelve signal lines 24 to the distribution bus generally designated by reference numeral 28. N signal lines 30 on the right hand side of the distribution bus 28 can be considered to be the outputs of the distribution bus 28. Each of the N signal lines 30 carry information for one of the N users of the system. The system users are callers, and may be more generally referred to as transmitters.

Each of the N transmitters or callers is associated with one of N transmitter decoding blocks, generally designated by numeral 54 in Figure 2. Only one of the N transmitter decoding blocks 54 is shown in Figure 2 for reasons of clarity. The transmitter decoding block is connected to one of the N outputs 30₁ to 30_{N} of the distribution bus. It will be appreciated that all the other N outputs 30 of the distribution bus will be connected to a respective transmitter decoding block 54.

Each transmitter decoding block 54 extracts, at a given instant in time, from the one of the N signal lines 30 to which it is connected information associated with one of the N users.

The distribution bus 28 presents on each of the N outputs 30 the twelve signals present on lines 24 at the input of the distribution bus. Thus, in this example, each of the outputs 30 of the distribution bus contains information from the twelve signal lines.

The twelve signal lines on line 30 are presented to the select block 36 of the transmitter decoding block 54. Each of the transmitter decoding blocks 54 is associated with a particular one of the N users. The control circuit 24 controls each of the N select blocks 36 to ensure that the signals on the lines 30 associated with a particular transmitter or caller are selected. The particular signals on the lines 30 selected are those associated with the call which the block 54 is currently processing. The selected signals are presented on the output of the select block on line 38. The base station controls the operation of the control circuit 24 such that the transmitter decoding block 54 processes the signals which are the strongest on the corresponding line 30.

The signals on line 30 associated with the particular user are thus output on lines 38 at the output of the select block 36.

The signals on line 40 are then presented to a block of rake fingers 40. The number of rake fingers provided in the block of rake fingers will vary according to the requirements of the implementation, and for the purposes of this example there are assumed to be eight fingers in the rake finger block 40.

The outputs of the rake finger block, in this example eight signals, are provided on lines 42 to the CEC block 44, which has a number of CECs corresponding to the number of rake fingers. In this example, the eight outputs of the CEC block 44 are presented on lines 46 to the combiner 48.

The combiner combines the elements or multi-paths associated with the particular transmitter or caller being decoded in the transmitter decoding block 54, and presents a single output representing the recovered transmitted signal on line 50. The signal on line 50 is then presented to the processing block 52 for further standard processing in accordance with the art. The processing block 52 performs other processing associated with decoding in higher layers.

It should be noted that in the arrangement of Figure 2 there will be provided some acquisition and searching means for determining which signals are to be selected for a call and a tracking means to allow the processing in the processing unit 54 to be optimised. Such acquisition and searching means are not shown in Figure 2 as they are outside the scope of the present invention, and their implementation is well-known in the art.

The advantage of this arrangement is that it pools resources to ensure minimum blocking probability.

A significant disadvantage of the arrangement of the distribution bus as shown in Figure 2 is the need for a large distribution bus. The entire sampled baseband signal, in this example 12 sector antennas must be placed on this distribution bus 28. In previous systems is was possible to distribute the analogue baseband signal. However, with 12 sector antennas, it is impractical to make the 12 analogue signal available for each block 36. Too many cables and combiners are needed. It is therefore necessary for the digital sampled baseband signal to be distributed on the distribution bus 28.

The digital sampled baseband signal has to operate at such high speeds due to the bandwidth of next generation systems, and the number of sector antennas (i.e. signal sources), that the implementation of the distribution bus becomes extremely expensive in terms of signal routing resources (e.g. back-planes, cables, signal transmission devices).

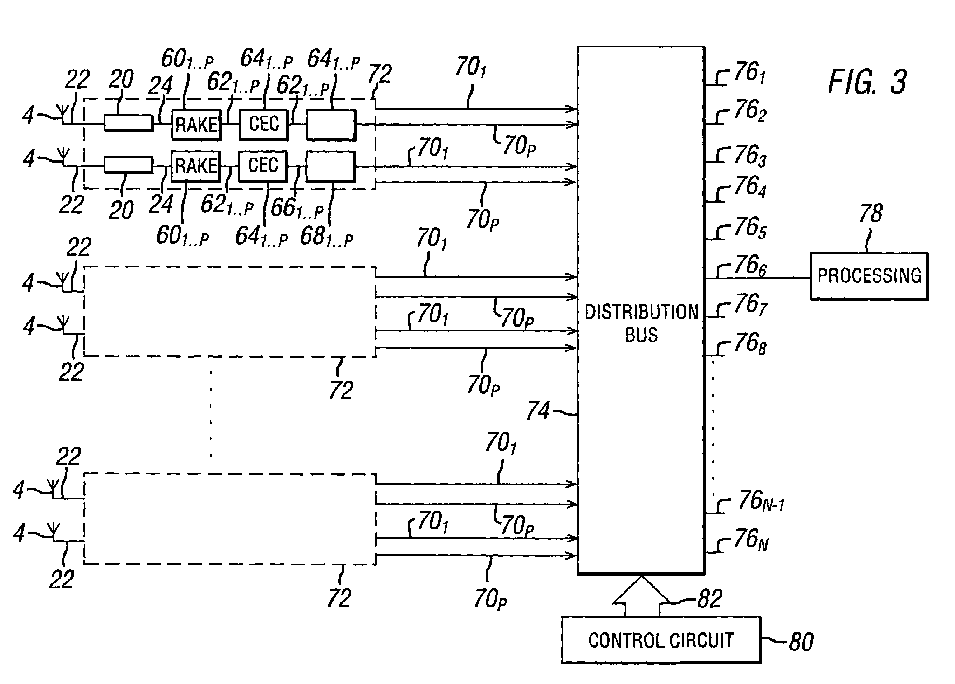

The invention will now be described with reference to Figure 3 by way of an example implementation for the scenario of Figure 1(a).

Where an element shown in Figure 3 is the same as an element shown in Figure 2, like reference numerals are used.

As described hereinabove with reference to Figure 2, the signal detected at each antenna 4 is provided on a signal line 22 to the front-end processing circuitry 20 in a particular sector. The front end processing circuitry provides on signal line 24 the processed received signal.

Each antenna 4 of a sector receives usable signals from a limited number of callers or transmitters P at any one time, which is less than the total number of transmitters N which can be supported by the whole system at any one time.

In accordance with this preferred embodiment of the invention, the output of each one of the front-end processing circuits 20 is provided to a bank of rake receivers. That is, each signal on line 24 is provided as an input to a bank of P rake receivers, each rake receiver being associated with a particular one of the P users which may be supported by the particular antenna 4. Each rake receiver includes a plurality of rake fingers, and in this example implementation, it is assumed that each rake receiver has eight rake fingers.

Thus a bank of P rake receivers 60₁..60_{P} are associated with each front-end processing circuitry 20. Therefore each sector in this example is provided with 2P rake receivers, and in total in this example the system has 12P rake receivers.

Each of the rake receivers 60₁..60_{P} generates on a respective output line a plurality (in this example eight) of signals 62₁..62_{P} to a bank of P CEC blocks 64₁..64_{P}. Each CEC block generates on a respective output line a plurality (in this example eight) of signals 66₁..66_{P} to a plurality of P combiners 68₁..68_{P}. Each combiner 68₁..68_{P} combines the eight outputs from the respective CEC block to generate an output for a particular user. Thus the P combiners associated with each received signal generate P output signals on lines 70₁..70_{P}.

It should be noted that the functionality of the rake receivers in combination with the functionality of the channel estimation and correction perform demodulation of the received signals. That is the rake receivers de-spread the received signal, but the received signal is demodulated only after the channel estimation and correction step.

Thus there is provided as inputs to the distribution bus 74 a set of P input signals from each channel, where each of the P input signals is associated with each of up to N callers or transmitters.

It should be noted, however, that a further combining step could take place before the signals are input to the distribution bus. The pairs of outputs from the pairs of combiners in each sector could be combined to form a single set of P input signals from each sector rather than 2P input signals. Other improvements along similar lines for other possible system arrangements will be apparent to the skilled person (e.g. modifications for multiple antennas).

The distribution bus operates, under the control of the control circuit 80 via signal lines 82 as will be described further hereinafter, to connect the P input signals from each channel to the appropriate one of the N signal lines 76₁..76_{N} associated with each of the N callers on the output of the distribution bus 74. Each of the N signal lines associated with a respective caller forms an input to a respective processing circuitry block 78, which operates in a similar fashion to the processing circuitry 52 of Figure 2 to further process a received call.

The implementation of the distribution bus for distributing the P signals from each channel to the appropriate processing circuitry for each of the N callers may vary.

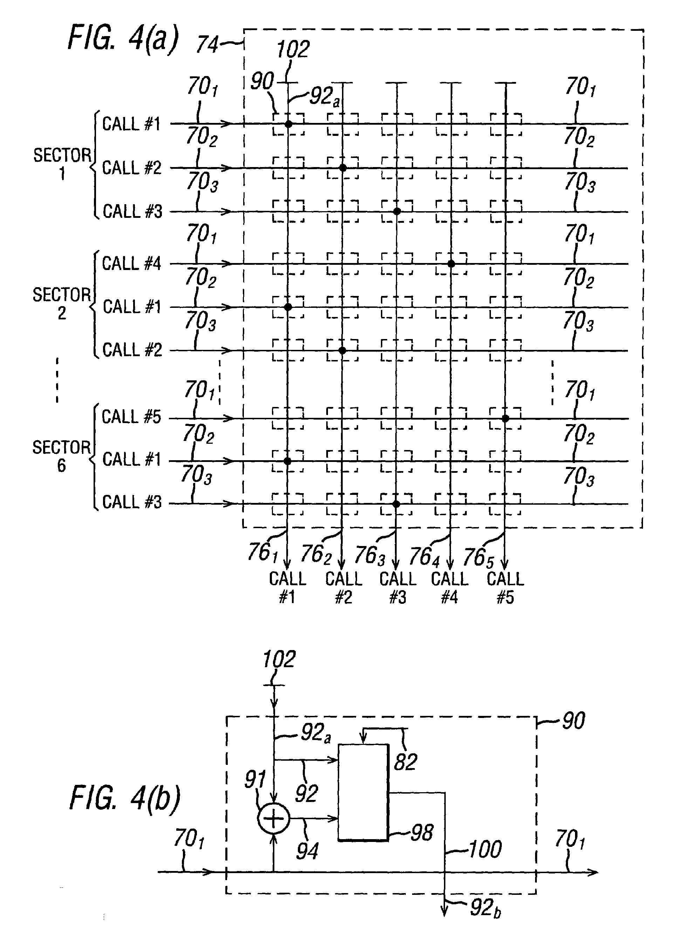

Referring to Figures 4(a) and 4(b), a first example implementation of such a distribution bus is given. In Figure 4(a) a much simplified implementation is assumed where there are three channels, each channel being capable of supporting three calls (P=3). In total the system can support five calls (N=5). As illustrated in Figure 4(a) each of the signal outputs for each of the channels on lines 70 crosses with a signal output for a particular call on line 76 in a connector unit generally designated by reference numeral 90.

In this simplified example, connections which are made from the signal outputs of each channel on lines 70 to the signal output for a particular transmitter or caller on lines 76 are represented by a solid circle in the box 90. Thus signals received in the various channels are provided as outputs associated with the appropriate caller.

Although in Figure 4(a), and in Figure 3, it is shown that there is a distinct physical line 76 associated with each individual caller, there may in fact be a reduced number of physical lines fewer in number than the actual number of callers supported by the system. The signals for each caller may then be time multiplexed onto such lines. Thus in the simplified example of Figure 4(a) the five lines 76₁ to 76₅ may be replaced by a single line, and the information associated with the respective five calls time multiplexed onto such line.

Figure 4(b) shows in some more detail an example implementation of the connector unit 90 for implementing the distribution bus according to the present invention. In practice the implementation of the bus shown in Figure 4(a) will be well within the scope of a skilled person.

Each connector unit 90 includes a summer 91 and a multiplexor 98. The operation of the connector unit 90 will be described with reference to the specific connector unit at the top left of the distribution bus 74 of Figure 4(a). The connector unit 90 receives as one input a signal on line 92a, which is the output of the connector unit directly vertically above it in the distribution bus. As the connector unit 90 is the first such unit, then this input is connected to a termination point 102. The connector unit 90 receives as a second input the signal on line 70₁ in sector 1. The signals on lines 92a and 70₁ are added together in summer 91, and presented on line 94 to the multiplexor 98. The output of the multiplexor on line 100 forms the input on line 92b to the next vertically lower connection unit in the distribution bus.

In the next vertically lower connection unit no connection is to be made, and the input signal on line 92b will be passed through the multiplexor directly onto the line 100. Control of the multiplexor 98 is via a control signal 82 generated by the control circuit 80. The control circuit 80 determines whether the input signal on line 92a is added to the signal on line 70₁, or whether it is merely passed straight to the output.

It will also be appreciated that the respective connector units 90 will be clocked so as signals are presented on the output lines 76 with appropriate timing.

As will be appreciated, in a practical system the number of channels and the number of potential callers is large, and thus in the following an alternative implementation of the distribution bus 74 is provided which seeks to provide an efficient utilisation of bus capacity.

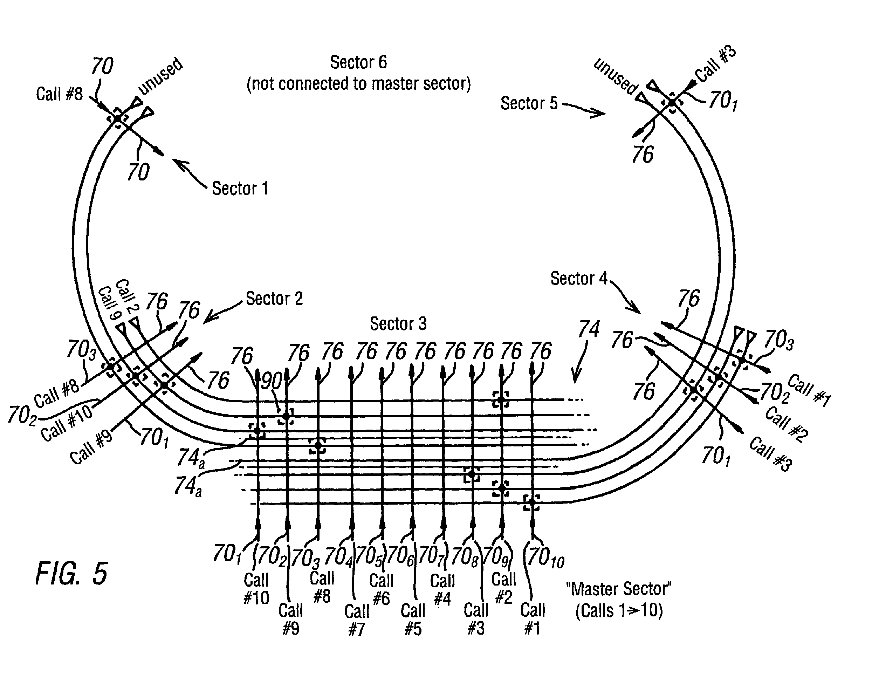

Referring to Figure 5, a second example implementation of a distribution as presented in Figure 3 is given. This example implementation seeks to efficiently implement the distribution bus based on a statistical distribution of the received signals. That is to say, an assumption is made that the signal from a particular transmitter or caller will be strongest in a particular sector, and weaker in others. For instance, referring to the arrangement of Figure 1(a), initial searching and acquisition may detect that the received signal for a particular transmitter or caller is strongest in sector 3. An assumption may then be made that the signal will be weakest, and possibly negligible, in the opposite sector, i.e. sector 6.

Thus on the basis that there are a large number of calls in the system, it is possible to allocate bus capacity on a statistical basis. For example, it may be assumed that 30% of calls will reach those sectors adjacent the sector with the strongest received signal, 10% of calls will reach the next adjacent sector, and 1% will reach the opposite sector. Thus where the strongest signal is detected in sector 3, it is assumed that 30% of that call will reach sectors 2 and 4, 10% will reach sectors 1 and 5, and 1% will reach sector 6.

In all cases the sector which detects the strongest signal strength for a particular caller will become the 'master sector' for that caller. Thus at any one time each sector may be the 'master sector' in respect of a number of callers. The master sector receives all signals associated with calls for which it is master sector, and processes those calls.

Here an example is used to clarify the operation of the implementation. The example assumes 10 calls having the strongest signal in sector 3.

For those 10 calls determined strongest in sector 3, sector 3 therefore becomes the 'master sector'. Signals associated with each of those ten calls detected in other sectors are then fed to sector 3 using the bi-directional bus. On the assumption that 30% of the 10 calls will be detected in sectors 2 and 4, sectors 2 and 4 each provide signals associated with 30% (i.e. three) of the ten calls. Similarly sectors 1 and 5 provide signals associated with 10% (i.e. one) of the ten calls. No signals are provided from sector 6.

In the example of Figure 5, it is assumed that the initial searching and acquisition determines that 10 calls are strongest in sector 3. Of course other signals will be detected as strongest in other sectors, but for the purposes of a simplified illustrative example of the principle of the distribution bus in Figure 5 the details of the bus associated only with sector 3 as 'master sector' are shown.

Thus, in sector 3, signals associated with all ten calls (generally termed call numbers 1 to 10 in this example) are provided on lines 70₁ to 70₁₀. In sector 4 calls associated with call numbers 1, 2 and 3 are detected and provided on lines 70₁ to 70₃. In sector 2 calls associated with call numbers 8, 9 and 10 are detected and provided on lines 70₁ to 70₃. In sector 5 a call associated with call number 3 is detected and provided on line 70₁. In sector 1 a call associated with call number 8 is detected and provided on line 70₁.

The signals associated with calls 1 to 10 and detected in sectors 1,2,4 and 5 are provided to the master sector, sector 3, for processing. In a similar manner to the arrangement shown in Figure 4(a), each signal line 70 from a sector crosses the bi-directional distribution bus 74, and a connection unit 90 is provided at each such crossing point, which connection unit is controlled by the control circuit 80. Referring to Figure 5, those connection units 90 in which a connection is made are represented by a solid circle in the connection unit.

Thus in this way the signals associated with each of callers 1 to 10 are presented for processing in sector 3.

In order to build up a picture of the complete bus for all calls processed by all sectors at any one time, the drawing of Figure 5 can be repeated for each sector as the 'master sector'. Combining all the master sectors, the result is a bi-directional bus around the entire base transceiver station.

The bus bandwidth between sectors may be limited to less than that in the individual sectors. For example in this example the bi-directional busses connecting sectors may be 20% of the sector bus. This is particularly useful in distributed base station systems where sectors, and their front end signal processing 72, are physically remote from each other (e.g. Figure 1(b)). The separation of the sectors may be from metres to kilometres.

Additional bus lines 74a are shown in sector 3 of Figure 5, these bus lines provide additional bandwidth for routing for local processing in the particular sector.

In an alternative arrangement to that shown in Figure 3, the invention may be implemented with the rake receivers and CEC blocks physically separated from the combining blocks by the distribution bus. That is, referring to Figure 3, The outputs of the CEC blocks 64 are presented to form the inputs to the distribution bus 74, and the combining blocks 68 are included in the circuitry at the output of the distribution bus. Such an arrangement still enables the rake receivers to be implemented at the front end, thereby avoiding the need to transfer the sampled RF signal of all channels to all baseband-processing units.

One disadvantage of transferring symbols only is that the outputs of the rake fingers are potentially very bursty, since the relationship between the rake fingers and the combiners is constantly changing. The sectors that are receiving multi-path signals change as the mobile moves, altering data flow. Another disadvantage is that the busses and rake fingers must be dimensioned to cope with peak traffic instead of average traffic.

When the control of the rake fingers and the combining is separated, a different bus configuration is required to send the appropriate symbol estimates from the rake fingers to the relevant baseband processing unit. The bus must be designed for peak data rates, which data rates may only occur for a small fraction of the time that could be efficiently grouped together in a slot.

It should be noted that in the above examples of Figures 3 to 5 the received signals are processed by the rake receivers and by the channel estimation and correction circuitry in succession on the same side of the bus, such that demodulation is carried out effectively in two successive steps on the same side of the bus. However, in certain implementations it may be possible for the channel estimation and correction to be performed on the right hand side of the distribution with the rake receivers implemented on the left hand side of the distribution bus. However, the implementation described in the examples presented herein is the preferred example.

## Claims

1. A method for processing received signals in a spread-spectrum communication system, comprising: receiving spread-spectrum signals in a plurality of channels; de-spreading the received spread spectrum signal received in each channel; and routing the de-spread received signal in each channel for further processing.

2. The method of claim 1 wherein the step of de-spreading the received spread-spectrum signals is included in a demodulating step in the plurality of channels.

3. The method of claim 2 wherein the demodulation step includes performing channel estimation and correction.

4. The method of any one of claims 1 to 3 wherein the step of routing comprises combining the de-spread received signal in each channel with the de-spread received signals in other channels associated with the same transmitter.

5. The method of any one of claims 1 to 4 in which each channel receives spread spectrum signals associated with a plurality of transmitters.

6. The method of claim 5 wherein the step of de-spreading the received spread-spectrum signal includes combining those de-spread signals associated with the same transmitter.

7. The method of any preceding claim in which at least a plurality of channels are defined by a multi-sector receiver cell arrangement.

8. The method of claim 7 wherein the routing step comprises routing the de-spread received signals in each channel associated with the same transmitter to a particular sector for further processing.

9. The method of claim 6 further comprising the step of detecting in which sector the received signal from a particular transmitter is strongest, wherein the de-spread received signals in each other sector which are associated with that transmitter are routed to that sector.

10. The method of claim 9 wherein the numbers of signals from each other sector which are distributed to that sector is determined on a statistical basis.

11. The method of claim 9 or 10 wherein a defined number of received signals received in the sector in which the received signal is strongest are processed, and a proportion of received signals from that transmitter received in other sectors are routed to that sector, which proportion becomes successively less in sectors which are successively further away from that sector.

12. The method of any preceding claim in which the step of de-spreading comprises generating a sampled baseband signal.

13. The method of any preceding claim in which the step of routing comprises distributing on a bus.

14. The method of any preceding claim in which the receiver of the spread-spectrum communication system comprises a distributed single cell.

15. The method of any preceding claim in which the number of channels is defined by the number of sectors in a cell, the number of antennas in each sector, and the number of carrier frequencies used by the transmitter.

16. A spread-spectrum communication system comprising: input circuitry for receiving spread-spectrum signals in a plurality of channels; de-spreading circuitry for de-spreading the received spread-spectrum signal in each channel; and routing means for routing the de-spread received signal in each channel to further processing circuitry.

17. The spread-spectrum communication system of claim 16 further comprising channel estimation and correction circuitry for demodulating the de-spread signal received signal in each channel prior to routing.

18. The spread-spectrum communication system of claim 16 or claim 17 wherein the routing means includes combining means for combining the outputs of the de-spreading circuitry which are associated with the same transmitter.

19. The spread-spectrum communication system of any one of claims 16 to 18 in which the de-spreading circuitry includes combining means for combining those de-spread received signals received in the same channel and associated with the same transmitter.

20. The spread-spectrum system of any one of claims 16 to 19 which comprises a multi-sector receiver cell arrangement, wherein further processing circuitry is provided in each sector, the routing means being adapted to route all de-spread received signals associated with the same transmitter to the further processing circuitry in one particular sector.

21. The spread-spectrum system of claim 20 further comprising means for detecting the sector in which a particular received signal is the strongest, wherein the routing means routes de-spread received signals in other sectors associated with that transmitter to that sector.

22. The spread-spectrum communication system of any one of claims 16 to 21 in which the routing means is a distribution bus.
